# EUROPEAN PATENT APPLICATION

(11) **EP 1 315 298 A1**
(43) Date of publication of application: **28.05.2003**
(21) Application number: 02024204.6
(22) Date of filing: 30.10.2002
(51) Int. Cl.: H03K 17/082, H02M 7/5387, H03K 17/16

(54) **System and method for driving three-phase induction motor**

(30) Priority: 26.11.2001 KR 2001073988
(71) Applicant: LG Electronics, Inc., Seoul 150-010 (KR)
(72) Inventor: Baik, In Chul, Kyungmyung-si, 423-060 Kyungki-do (KR)
(74) Representative: TER MEER STEINMEISTER & PARTNER GbR

(57) **Abstract**

A system and method for driving a three-phase induction motor, wherein an inverter power module is provided to supply voltages of three phases to the three-phase induction motor to drive it, a plurality of power supplies are provided to supply powers to a plurality of power devices constituting the inverter power module, and an insulator is provided to insulate the plurality of power supplies and the power module from each other. The present invention can minimize interferences based on a difference between voltages continuously applied to the inverter power module while the three phase voltages are supplied from the inverter power module to the three-phase induction motor. Furthermore, a plurality of photocouplers and a plurality of driving devices constituting the insulator are disposed on a printed circuit board in such a manner that they are spaced apart from one another, thereby minimizing interferences among powers, the amount of abnormal leakage and the effect of a voltage variation on the three-phase induction motor.

## Description

### BACKGROUND OF THE INVENTION

### Field of the Invention

The present invention relates to systems and methods for driving three-phase induction motors, and more particularly to a system and method for driving a three-phase induction motor, wherein power supplies, driving devices and so forth are disposed on a printed circuit board in such a manner that they are spaced apart from one another, thereby preventing interferences from occurring due to a difference among voltages of three phases while the three-phase induction motor is driven.

### Description of the Related Art

Recently, a three-phase induction motor, not a single-phase induction motor, has been increasingly widely used to drive a compressor for a cooling system. In particular, the three-phase induction motor can supply high power with a voltage of about 380V to the compressor, so it is increasingly used over a wider range than the single-phase induction motor capable of supplying power with a voltage of 220V at maximum to the compressor.

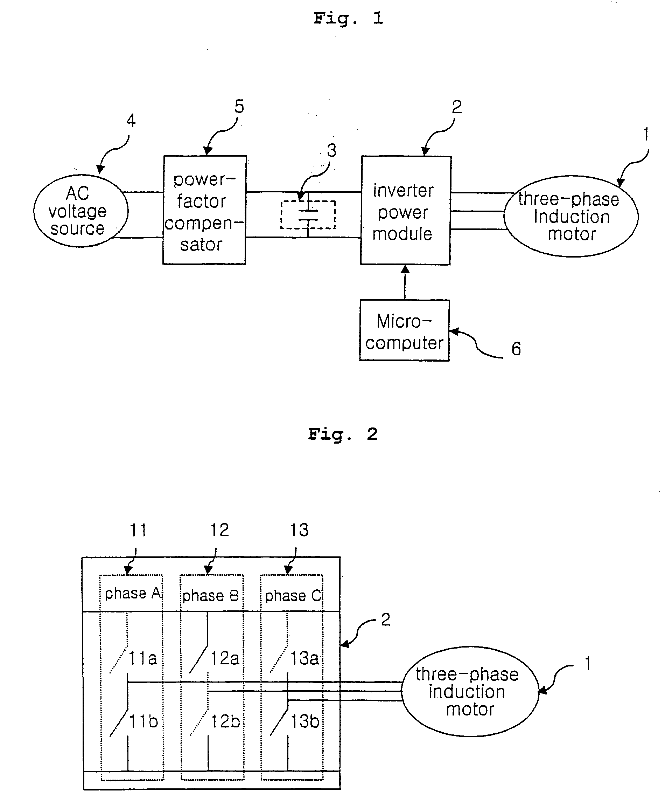

A conventional system for driving such a three-phase induction motor will hereinafter be described with reference to Fig. 1.

With reference to Fig. 1, the conventional three-phase induction motor driving system comprises an inverter power module 2 for applying voltages of three phases, a phase A, phase B and phase C, to a three-phase induction motor 1 to drive the induction motor 1 with the three phase voltages, a direct current (DC) voltage source 3 for supplying a DC voltage to the inverter power module 2, an alternating current (AC) voltage source 4 for supplying an AC voltage to the driving system, a power-factor compensator 5 for compensating for a power-factor of the AC voltage supplied by the AC voltage source 4, and a microcomputer 6 for controlling the application of the three phase voltages from the inverter power module 2 to the three-phase induction motor 1.

The inverter power module 2 is adapted to apply the voltages of the phase A, phase B and phase C to the three-phase induction motor 1 under the control of the microcomputer 6. To this end, the inverter power module 2 includes, as shown in Fig. 2, first, second and third power device sets 11, 12 and 13 for applying the DC voltage from the DC voltage source 3 applied in parallel thereto to the three-phase induction motor 1.

The first to third power device sets 11-13 include upper and lower power devices 11a and 11b, 12a and 12b and 13a and 13b, respectively. The upper and lower power devices 11a and 11b, 12a and 12b and 13a and 13b are alternately turned on/off to apply the voltage of the phase A, the voltage of the phase B and the voltage of the phase C to the three-phase induction motor 1, respectively. For example, in the case where the first upper power device 11a is turned off, the first lower power device 11b is turned on, the second upper power device 12a is turned on, the second lower power device 12b is turned off, the third upper power device 13a is turned off and the third lower power device 13b is turned on.

However, as the plurality of power devices are continuously turned on/off in the process of driving the three-phase induction motor, the application/interruption of a DC voltage of 540V therefrom is instantaneously and repeatedly made, resulting in unnecessary voltage or signal interferences among circuits of the inverter power module.

### SUMMARY OF THE INVENTION

Therefore, the present invention has been made in view of the above problems, and it is an object of the present invention to provide a system and method for driving a three-phase induction motor, which can prevent voltage or signal interferences from occurring in an inverter power module which supplies three phase voltages to the three-phase induction motor to drive it and in driving devices which supply powers to the inverter power module.

In accordance with one aspect of the present invention, the above and other objects can be accomplished by the provision of a system for driving a three-phase induction motor, comprising: an inverter power module for applying voltages of three phases to the three-phase induction motor, the inverter power module including a plurality of power devices; a plurality of power supplies for supplying powers to the power devices of the inverter power module, the power supplies being disposed on a printed circuit board in such a manner that they are spaced apart from one another to prevent interferences among the powers supplied to the power devices; an insulator connected to the power supplies for insulating the powers supplied from the power supplies to the power devices of the inverter power module from one another; and a microcomputer for generating a pulse width-modulated drive signal for control of the driving of the three-phase induction motor and outputting the generated drive signal to the insulator.

In accordance with another aspect of the present invention, there is provided a method for driving a three-phase induction motor, comprising the steps of: a) generating and outputting a pulse width-modulated signal for control of supply of powers from a plurality of power supplies to a plurality of power devices of an inverter power module, the inverter power module applying voltages of three phases to the three-phase induction motor; b) sequentially turning on a plurality of photocouplers in response to the pulse width-modulated drive signal outputted at the step a) to supply the powers from the power supplies to the power devices; and c) sequentially turning on the power devices with the powers supplied as the photocouplers are turned on at the step b), so as to apply the three phase voltages to the three-phase induction motor.

### BRIEF DESCRIPTION OF THE DRAWINGS

The above and other objects, features and other advantages of the present invention will be more clearly understood from the following detailed description taken in conjunction with the accompanying drawings-, in which:
Fig. 1 is a block diagram showing the construction of a conventional system for driving a three-phase induction motor;
Fig. 2 is a block diagram of an inverter power module in Fig. 1;
Fig. 3 is a block diagram showing the construction of a system for driving a three-phase induction motor in accordance with the present invention;
Fig. 4 is a block diagram of an inverter power module in Fig. 3;
Fig. 5 is a block diagram of a microcomputer, an insulator and power supplies in Fig. 3; and
Fig. 6 is a flow chart illustrating a method for driving a three-phase induction motor in accordance with the present invention.

### DESCRIPTION OF THE PREFERRED EMBODIMENTS

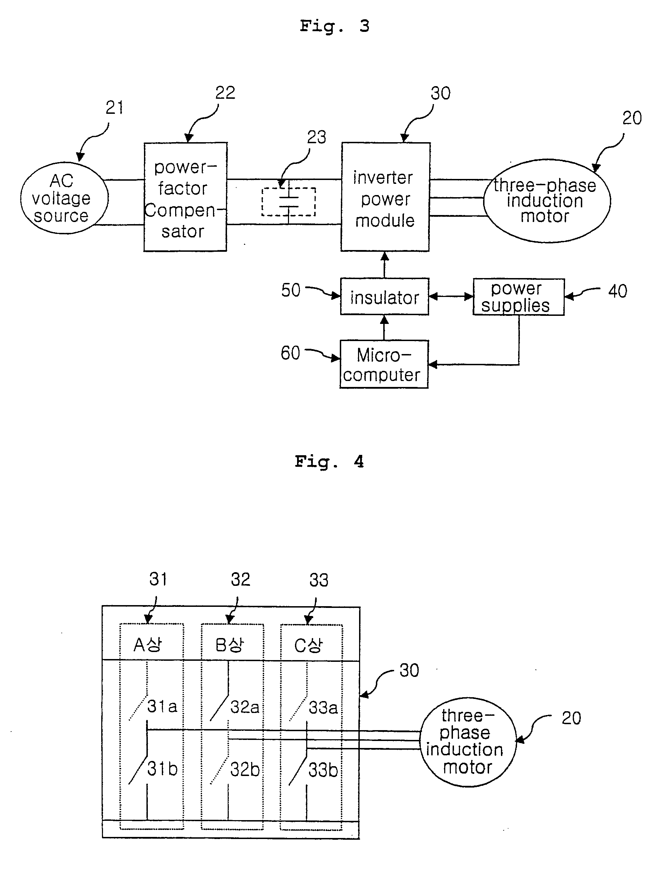

With reference to Fig. 3, there is shown in block form the construction of a system for driving a three-phase induction motor in accordance with the present invention. As shown in this drawing, the three-phase induction motor driving system comprises a three-phase induction motor 20 which is driven with voltages of three phases, a phase A, phase B and phase C, an AC voltage source 21 for supplying an AC voltage to the three-phase induction motor driving system according to the present invention, a power-factor compensator 22 for compensating for a power-factor of the AC voltage supplied by the AC voltage source 21, a DC voltage source 23 for receiving the power-factor-compensated AC voltage from the power-factor compensator 22 and supplying a DC voltage, and an inverter power module 30 for receiving the DC voltage from the DC voltage source 23 and applying the three phase voltages to the three-phase induction motor 20.

The three-phase induction motor driving system further comprises a plurality of power supplies 41, 42, 43 and 44 (hereinafter denoted collectively only as 40) for supplying powers to a plurality of power devices 31a and 31b, 32a and 32b and 33a and 33b which constitute the inverter power module 30, as shown in Fig. 4, an insulator 50 for preventing interferences among the powers supplied by the power supplies 40, and a microcomputer 60 for generating a pulse width-modulated drive signal for control of the three-phase induction motor and outputting the generated drive signal to the insulator 50 to control the supply of the powers from the power supplies 40 to the power devices 31a and 31b, 32a and 32b and 33a and 33b through the insulator 50.

The insulator 50 is adapted to supply the powers from the power supplies 40 to the plurality of power devices 31a and 31b, 32a and 32b and 33a and 33b in response to the pulse width-modulated drive signal from the microcomputer 60 so as to apply pulse width-modulated DC voltages to the three-phase induction motor. The microcomputer 60 is adapted to apply the pulse width-modulated drive signal to the insulator 50 to select one of the powers from the power supplies 40 such that the selected power is supplied to a corresponding one of the power devices 31a and 31b, 32a and 32b and 33a and 33b in the inverter power module 30. As a result, the microcomputer 60 controls the supply of the powers from the power supplies 40 to the power devices 31a and 31b, 32a and 32b and 33a and 33b through the insulator 50 to control ON/OFF states of the power devices 31a and 31b, 32a and 32b and 33a and 33b so as to drive the three-phase induction motor.

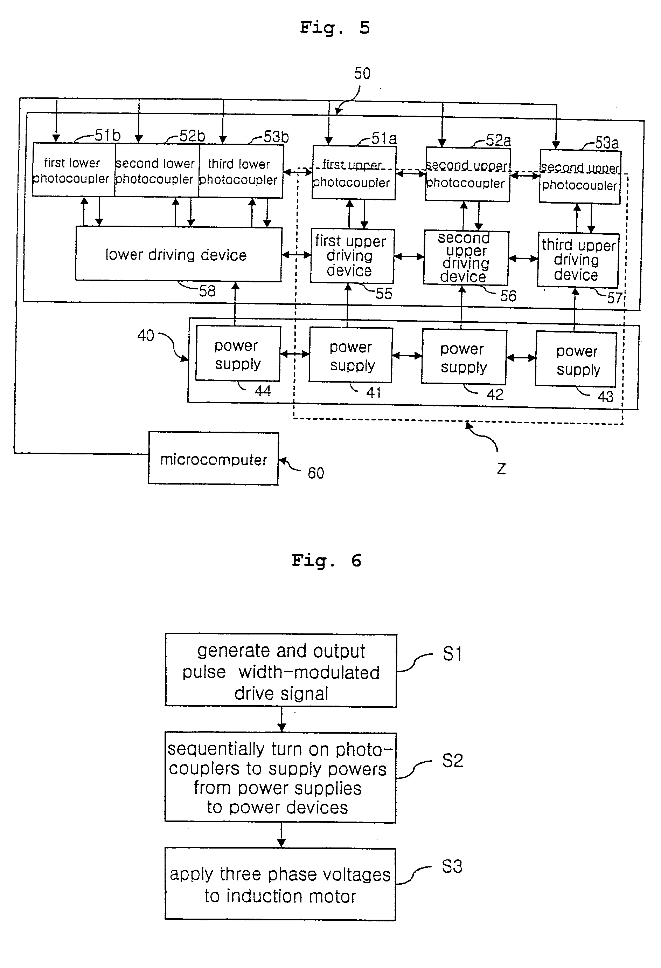

The insulator 50, power supplies 40 and microcomputer 60 are configured as shown in Fig. 5.

With reference to Fig. 5, the insulator 50 includes a plurality of photocouplers 51a and 51b, 52a and 52b and 53a and 53b turned on/off in response to the pulse width-modulated drive signal for separating a ground of the microcomputer 60 and grounds of the power supplies 40 from each other, and a plurality of driving devices 55, 56, 57 and 58 each for applying a corresponding one of the powers from the power supplies 40 to a corresponding one of the power devices 31a and 31b, 32a and 32b and 33a and 33b in the inverter power module 30 when a corresponding one of the photocouplers 51a and 51b, 52a and 52b and 53a and 53b is turned on.

The driving devices 55, 56, 57 and 58 are disposed on a printed circuit board in such a manner that they are spaced apart from one another, thereby preventing interferences from occurring when the powers from the power supplies 40 are applied to the power devices 31a and 31b, 32a and 32b and 33a and 33b in the inverter power module 30.

The plurality of photocouplers 51a and 51b, 52a and 52b and 53a and 53b are turned on in response to the pulse width-modulated drive signal from the microcomputer 60 to apply the powers from the plurality of power supplies 41, 42, 43 and 44 to the first upper and lower power devices 31a and 31b, the second upper and lower power devices 32a and 32b and the third upper and lower power devices 33a and 33b, respectively.

The lower driving device 58, among the plurality of driving devices 55, 56, 57 and 58, acts to supply the same power from the same power supply 44 to the first, second and third lower power devices 31b, 32b and 33b. The first, second and third upper driving devices 55, 56 and 57, among the plurality of driving devices 55, 56, 57 and 58, act to supply the powers from the power supplies 41, 42 and 43, which are disposed on the printed circuit board apart from one another, to the first, second and third upper photocouplers 51a, 52a and 53a, respectively.

The microcomputer 60 is supplied and operated with an insulated voltage of 5V from the power supply 44, which meanwhile supplies a voltage of 15V to the first, second and third lower power devices 31b, 32b and 33b. The plurality of power devices 31a and 31b, 32a and 32b and 33a and 33b in the inverter power module 30 are supplied and operated with the voltage of 15V. Assuming that the microcomputer 60 supplies the 15V voltage to the power devices 31a and 31b, 32a and 32b and 33a and 33b, the inverter power module 30 must supply a DC voltage of 540V to the three-phase induction motor 20 as the power devices 31a and 31b, 32a and 32b and 33a and 33b are turned on/off. In this case, the plurality of power devices 31a and 31b, 32a and 32b and 33a and 33b are repeatedly turned on/off under the condition that they are supplied with the same ground voltage, so they are damaged.

In order to solve the above problem, the microcomputer 60 applies a drive signal of 5V to the plurality of photocouplers 51a and 51b, 52a and 52b and 53a and 53b to supply the voltages of 15V from the power supplies 40 with different grounds to the plurality of power devices 31a and 31b, 32a and 32b and 33a and 33b.

The plurality of photocouplers 51a and 51b, 52a and 52b and 53a and 53b function to separate a ground of the pulse width-modulated drive signal from the microcomputer 60 and grounds of the powers from the plurality of power supplies 40 from each other.

The insulator 50 may preferably be implemented with BJTs (Bipolar Junction Transistors), IPMs, IGBTs or the like which are turned on/off in response to the pulse width-modulated drive signal from the microcomputer 60 to supply the powers from the plurality of power supplies 41, 42, 43 and 44 to the plurality of power devices 31a and 31b, 32a and 32b and 33a and 33b.

In order to prevent interferences between the pulse width-modulated drive signal inputted from the microcomputer 60 to the plurality of photocouplers 51a and 51b, 52a and 52b and 53a and 53b in the insulator 50 and the powers supplied from the power supplies 41, 42, 43 and 44, transmission lines of the pulse width-modulated drive signal are disposed on the printed circuit board in such a manner that they are spaced apart from the lower power supply 44 and lower driving device 58, the first, second and third upper power supplies 41, 42 and 43, and the first, second and third upper driving devices 55, 56 and 57.

In other words, the three-phase induction motor driving system according to the present invention needs the four insulated power supplies 41, 42, 43 and 44 to drive the three power device sets 31, 32 and 33 constituting the inverter power module 30. The upper power devices 31a, 32a and 33a are operated by being alternately and repeatedly applied with a difference between a high DC voltage and a low DC voltage according to a driven state of the inverter power module 30.

For example, in the case where the first upper power device 31a, second lower power device 32b and third upper power device 33a in Fig. 4 are turned on, a voltage of the second power device set 32 with the turned-on second lower power device 32b is low in level, whereas two voltages of the first and third power device sets 31 and 33 with the turned-on first and third upper power devices 31a and 33a are high in level.

Consequently, in order to maximize stability of the circuit operation by minimizing the amount of abnormal leakage, the power supplies 41, 42, 43 and 44 supplying powers to the plurality of power devices must be disposed to maintain inter-insulation distances.

To this end, as shown in Fig. 5, the power supplies 41, 42, 43 and 44 are patterned on the printed circuit board such that insulation distances thereamong are maintained and powers therefrom are applied to the insulator 50 while maintaining inter-insulation distances.

The driving devices 55, 56, 57 and 58 are positioned at an output stage of the photocouplers 51a and 51b, 52a and 52b and 53a and 53b in the insulator 50, namely, a stage for driving the plurality of power devices in the inverter power module 30 to limit a DC voltage-varying region of the printed circuit board to a "Z" region so as to minimize the effect of a voltage variation on other components applied with a low voltage. The microcomputer 60 operated at a low-voltage region and the transmission lines of the pulse width-modulated drive signal inputted from the microcomputer 60 to the insulator 50 are disposed in the direction of the lower driving device 58 to minimize the voltage variation effect.

Fig. 6 is a flow chart illustrating a method for driving the three-phase induction motor in accordance with the present invention.

At the first step S1 the microcomputer generates a pulse width-modulated drive signal appropriate to the driving of the three-phase induction motor and outputs the generated drive signal to the insulator. At this time, the microcomputer sequentially outputs the pulse width-modulated drive signal to the plurality of photocouplers in the insulator to supply voltages of three phases to the three-phase induction motor.

At the second step S2, the photocouplers are sequentially turned on in response to the pulse width-modulated drive signal to supply the powers from the power supplies connected thereto to the corresponding power devices in the inverter power module.

At the third step S3, the power devices are sequentially turned on with the supplied powers, namely, with the pulse width-modulated drive signal sequentially outputted to the photocouplers at the first step S1, so as to apply the three phase voltages to the three-phase induction motor.

As apparent from the above description, the present invention provides a system and method for driving a three-phase induction motor, wherein an inverter power module is provided to supply voltages of three phases to the three-phase induction motor to drive it, a plurality of power supplies are provided to supply powers to a plurality of power devices constituting the inverter power module, and an insulator is provided to insulate the plurality of power supplies and the power module from each other. The present invention can minimize interferences based on a difference between voltages continuously applied to the inverter power module while the three phase voltages are supplied from the inverter power module to the three-phase induction motor. Furthermore, a plurality of photocouplers and a plurality of driving devices constituting the insulator are disposed on a printed circuit board in such a manner that they are spaced apart from one another, thereby minimizing interferences among powers, the amount of abnormal leakage and the effect of a voltage variation on the three-phase induction motor.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A system for driving a three-phase induction motor, comprising:
an inverter power module for applying voltages of three phases to said three-phase induction motor, said inverter power module including a plurality of power devices;
a plurality of power supplies for supplying powers to said power devices of said inverter power module, said power supplies being disposed on a printed circuit board in such a manner that they are spaced apart from one another to prevent interferences among said powers supplied to said power devices;
an insulator connected to said power supplies for insulating said powers supplied from said power supplies to said power devices of said inverter power module from one another; and
a microcomputer for generating a pulse width-modulated drive signal for control of the driving of said three-phase induction motor and outputting the generated drive signal to said insulator.

2. The system as set forth in claim 1, wherein said insulator is adapted to control the supply of said powers from said power supplies to said power devices in said inverter power module in response to said pulse width-modulated drive signal from said microcomputer.

3. The system as set forth in claim 1, wherein said insulator includes:
a plurality of photocouplers turned on/off in response to said pulse width-modulated drive signal for separating a ground of said microcomputer and grounds of said power supplies from each other; and
a plurality of driving devices each for applying a corresponding one of said powers from said power supplies to a corresponding one of said power devices in said inverter power module when a corresponding one of said photocouplers is turned on.

4. The system as set forth in claim 3, wherein said driving devices are disposed on said printed circuit board in such a manner that they are spaced apart from one another to prevent interferences from occurring when said powers from said power supplies are applied to said power devices in said inverter power module.

5. The system as set forth in claim 3, wherein said three-phase induction motor is driven with voltages of a phase A, phase B and phase C and said inverter power module includes first, second and third power device sets connected in parallel, said power device sets being turned on/off in response to said powers supplied from said power supplies to apply said voltages of said phase A, phase B and phase C to said three-phase induction motor.

6. The system as set forth in claim 5, wherein said driving devices include:
a lower driving device for supplying the same power to photocouplers for first, second and third lower power devices in said first, second and third power device sets, said photocouplers for said first, second and third lower power devices separating a ground of said pulse width-modulated drive signal from said microcomputer from grounds of powers supplied from said power supplies to said first, second and third lower power devices; and
first, second and third upper driving devices for supplying powers respectively to photocouplers for first, second and third upper power devices in said first, second and third power device sets, said photocouplers for said first, second and third upper power devices separating said ground of said pulse width-modulated drive signal from said microcomputer from grounds of powers supplied from said power supplies to said first, second and third upper power devices.

7. The system as set forth in claim 6, wherein transmission lines of said pulse width-modulated drive signal inputted from said microcomputer to said first, second and third upper and lower photocouplers are disposed on said printed circuit board in such a manner that they are spaced apart from said lower driving device and said first, second and third upper driving devices to prevent interferences between said pulse width-modulated drive signal and said powers supplied from said power supplies.

8. The system as set forth in claim 3, wherein said driving devices include a plurality of power transistors turned on/off in response to said pulse width-modulated drive signal from said microcomputer for supplying said powers from said power supplies to said inverter power module.

9. A method for driving a three-phase induction motor, comprising the steps of:
a) generating and outputting a pulse width-modulated signal for control of supply of powers from a plurality of power supplies to a plurality of power devices of an inverter power module, said inverter power module applying voltages of three phases to said three-phase induction motor;
b) sequentially turning on a plurality of photocouplers in response to said pulse width-modulated drive signal outputted at said step a) to supply said powers from said power supplies to said power devices; and
c) sequentially turning on said power devices with said powers supplied as said photocouplers are turned on at said step b), so as to apply said three phase voltages to said three-phase induction motor.

10. The method as set forth in claim 9, wherein said step a) includes the step of sequentially outputting said pulse width-modulated drive signal to said plurality of photocouplers to apply said three phase voltages to said three-phase induction motor in a three-phase induction motor driving manner.
